# EUROPEAN PATENT APPLICATION

(11) **EP 4 454 797 A1**
(43) Date of publication of application: **30.10.2024**
(21) Application number: 23315137.2
(22) Date of filing: 28.04.2023
(51) Int. Cl.: B23D 45/12, B26D 3/00, B23D 53/00, B23D 53/08, B23D 57/00

(54) **A FLEXIBLE LINE DECONSTRUCTION UNIT, RELATED DECOMMISSIONING FACILITY AND METHOD**

(71) Applicant: TechnipFMC Subsea France, 92400 Courbevoie (FR)
(72) Inventor: Morand, Henri, WEST PERTH, 6005 (AU); Pride, Matthew, PERTH, 6000 (AU)
(74) Representative: Lavoix

(57) **Abstract**

The flexible line deconstruction unit (54), comprises:
- a flexible line section feeder (72) comprising an axial feeding and guiding system (92) having a flexible line section feeding axis (B-B'), the axial feeding and guiding system (92) being configured to receive a flexible line section (12) with the flexible line section longitudinal axis aligned with the feeding axis (B-B'), the flexible line section feeder (72) comprising a flexible line section driver (94, 96), configured to move the flexible line section (12) along the feeding axis (B-B'); and
- an axial cutting tool (74), positioned in the axial feeding and guiding system (92) to cut an axial split (40) in the flexible line section (12) along the feeding axis (B-B').

## Description

The present invention concerns a flexible line deconstruction unit.

The deconstruction unit is generally part of an onshore decommissioning plant, configured to process flexible line sections recovered from offshore sites, in order to recycle the metals and plastics contained in the flexible line sections.

The decommissioning of offshore fluid production sites after the termination of fluid production is currently a challenge for operators.

An offshore production site generally comprises fluid collection equipment located at the bottom of the body of water. Numerous fluid injection and/or production lines extend from the fluid collection equipment to the surface, to transport fluids to be injected in the ground below the bottom of the body of water and/or to collect fluids produced from the ground.

In some instances, fluid production is carried out in shallow or mid-shallow waters with lengths of the fluid lines being less than 600 m. In some cases, the production is carried out in deep waters, in which the fluid lines have a more significant length.

Given the number of lines required to inject or/and produce fluids in several wells, the decommissioning of the production site generally requires recovering very significant lengths of flexible lines.

The flexible lines are retrieved using recovery vessels, onto which they may be cut in short sections. If cut in short section, these sections generally have a length ranging from 10 m to 20 m. Alternatively, the retrieved flexible lines are stored onto reels or carousels installed on the deck of the vessel. The flexible lines are then cut in short sections offshore on the vessel or onshore at the deconstruction site.

Recycling the materials of the flexible line sections recovered from fluid production sites has a strong interest in order to generate revenue, in particular from the recovered metals. It is also beneficial for the environment, as the amount of non-reused waste is minimized.

BR 10 2014 031 802.0 discloses a recovery vessel having a deck equipped with a crusher configured to directly crush a recovered flexible pipe into small chips, and then, to separate the chips according to their nature, in order to recycle the metals and the plastics.

Such a solution is not entirely satisfactory. First, it requires a large amount of space on the recovery vessel, which limits the number and type of vessels which can be used to recover flexible lines offshore.

Second, the crusher on the offshore recovery vessel has to be maintained in operational conditions at any time, to be able to handle the continuous recovery of several hundred meters of flexible line. Any stop of production due to the crusher being not operational results in stopping the flexible line recovery and thus, adds significant costs to the recovery operation.

Finally, the crushing of the flexible line into chips is extremely energy consuming, especially since the metals which are used within the flexible lines are strong. This affects costs and environmental impact.

One aim of the invention is thus to obtain a decommissioning facility which can be operated to decommission and recycle significant lengths of flexible line using equipment which is simple to manage and economical.

To this aim, the subject matter of the invention is a flexible line deconstruction unit of the above-mentioned type, characterized by:
- a flexible line section feeder comprising an axial feeding and guiding system having a flexible line section feeding axis, the axial feeding and guiding system being configured to receive a flexible line section with the flexible line section longitudinal axis aligned with the feeding axis, the flexible line section feeder comprising a flexible line section driver, configured to move the flexible line section along the feeding axis; and
- an axial cutting tool, positioned in the axial feeding and guiding system to cut an axial split in the flexible line section along the feeding axis.

The flexible line deconstruction unit according to the invention may comprise one or more of the following feature(s), taken solely, or according to any technical feasible combination:
- the axial cutting tool comprises a saw, in particular a rotary saw having a saw rotation axis transverse to the feeding axis, or a blade or wire saw, having saw blade or wire axis transverse to the feeding axis;
- the cutting tool comprises a cleaning member, in particular a brush, positioned in contact with a periphery of the saw, at a fixed angular position with regard to the saw;
- the axial cutting tool comprises a saw positioning mechanism, configured to vertically and/or horizontally move the saw in the feeding and guiding system;
- the flexible line deconstruction unit comprises a flexible line section loader, configured to manually or automatically load a flexible line section into the axial feeding and guiding system;
- the flexible line section loader comprises at least a transverse conveyor configured to transversely move the flexible line section longitudinal axis towards the feeding axis;
- the flexible line deconstruction unit comprises a container, the container having a floor, a ceiling, and pillars connecting the floor to the ceiling, the container delimiting an inner volume receiving at least a downstream region of the feeding and guiding system, and the axial cutting tool, the feeding and guiding system comprising an upstream region protruding out of the inner volume;
- the flexible line section driver comprises lower horizontal rotary rollers positioned in the feeding and guiding system;
- the flexible line section feeder comprises vertical guide rollers, protruding vertically around the axial cutting tool, to laterally guide the flexible line section in contact with the axial cutting tool;
- the flexible line section feeder comprises a flexible line maintaining system, comprising at least a flexible line maintaining member, mobile towards the feeding and guiding system to maintain the flexible line section in the feeding and guiding system,
   the flexible line maintaining member optionally comprising maintaining rollers configured to maintain the flexible line in the feeding and guiding system, the flexible line maintaining system being configured to move the maintaining rollers towards the feeding and guiding system;
- the axial feeding and guiding system comprises a gutter defining the feeding axis, the gutter being configured to receive and guide a flexible line section with the flexible line section longitudinal axis aligned with the feeding axis;
- the flexible line maintaining member is borne by the ceiling of the container, and is configured to vertically move towards the feeding and guiding system;
- the flexible line deconstruction unit is located onshore;
- the flexible line is a flexible pipe, in particular an unbonded or a bonded flexible pipe, a hybrid flexible pipe or an umbilical.

The invention also concerns a decommissioning facility, comprising:
- a flexible line section storage or handling element, including a plurality of flexible line sections; and
- a flexible line deconstruction unit as defined above, to be fed with at least one flexible line section from the plurality of flexible line sections.

The decommissioning facility according to the invention.may comprise one or more of the following feature(s), taken solely, or according to any technical feasible combination:
- the decommissioning facility further comprises a flexible line section cleaning unit, the flexible line deconstruction unit comprising a separation stage, to separate layers of deconstructed flexible line sections having at least one longitudinal split obtained after cutting the flexible line sections in the flexible line deconstruction unit;
- the plurality of flexible line sections comprises flexible pipe sections or/and umbilical sections, each flexible pipe section and/or umbilical section including at least a polymer or composite sheath and at least an armor layer wound around the polymer or composite sheath, the axial cutting tool being configured to cut the axial split along a generatrix of the flexible line section through the polymer or composite sheath and the or each armor layer;
- the flexible line decommissioning facility is located onshore.

The invention also concerns a decommissioning method, comprising the following steps:
- feeding at least one flexible line section in a flexible line section feeder of a flexible line deconstruction unit, the flexible line section feeder comprising an axial feeding and guiding system having a feeding axis, the axial feeding and guiding system receiving the flexible line section, the flexible line section longitudinal axis aligning with the feeding axis;
- powering a flexible line section driver of the flexible line section feeder, to move the flexible line section along the feeding axis;
- cutting an axial split in the flexible line section along the feeding axis with an axial cutting tool of the flexible line deconstruction unit, the axial cutting tool being positioned in the feeding and guiding system;
- retrieving a deconstructed flexible line section having a longitudinal split along at least one generatrix.

The decommissioning method according to the invention may comprise one or more of the following feature(s), taken solely, or according to any technical feasible combination:
- it comprises moving a flexible line maintaining member of the flexible line section feeder towards the feeding and guiding system preferably in contact with the flexible line section to maintain the flexible line section in the feeding and guiding system;
- it comprises a preliminary step of recovering a flexible line offshore, and a step of splitting the recovered flexible line into flexible line sections, preferentially carried out offshore, the method comprising transporting the flexible line sections to the flexible line deconstruction unit.

The invention will be better understood, based on the following description, given solely as an example, and made in reference to the appended drawings, in which:
- [Fig.1] Figure 1 is an exploded view of a section of a flexible line intended to be deconstructed and recycled in a flexible line deconstruction unit according to the invention which in this example is located onshore, the flexible line being here a flexible pipe;
- [Fig.2] Figure 2 is an upper perspective view of a first decommissioning facility comprising the flexible line deconstruction unit according to the invention;
- [Fig.3] Figure 3 is an enlarged view of the onshore deconstruction unit of figure 2;
- [Fig.4] Figure 4 is a view of a detail of the onshore deconstruction unit of figure 3, showing the axial cutting tool in operation to longitudinally cut an axial split into the flexible line;
- [Fig.5] Figure 5 is a perspective view of the axial cutting tool;
- [Fig.6] Figure 6 is a top view of the axial cutting tool and of guiding rollers of a flexible line section feeder;
- [Fig.7] Figure 7 is a flow chart of a first decommissioning method according to the invention; and
- [Fig.8]. Figure 8 is an end view of a deconstructed flexible line obtained by a first decommissioning method according to the invention.
- [Fig.9] Figure 9 is an end view of a deconstructed flexible line obtained by a second decommissioning method according to the invention.

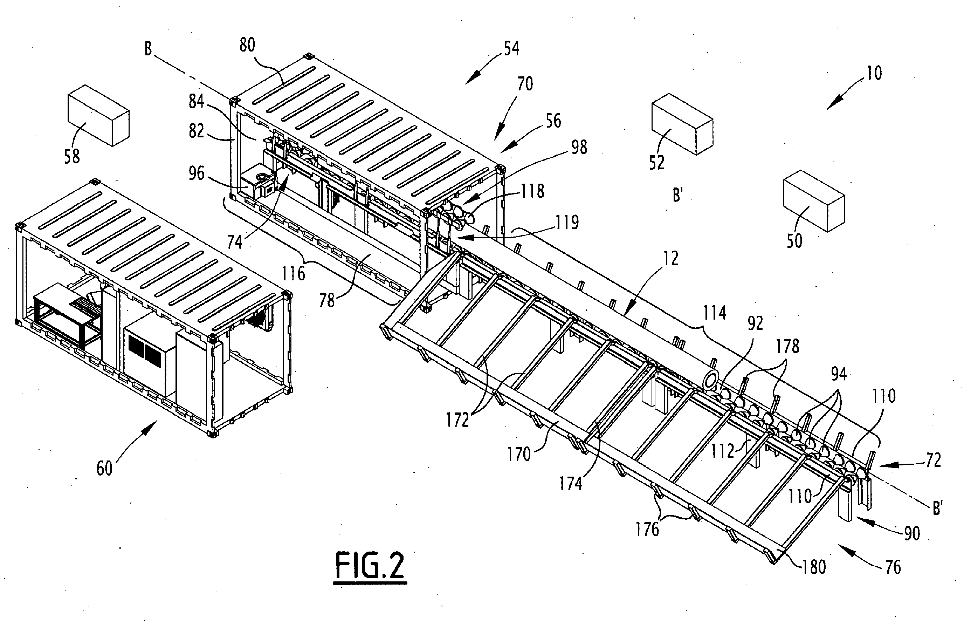

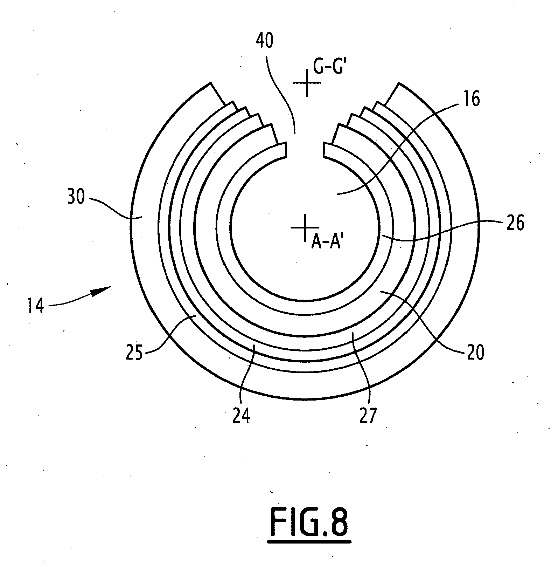

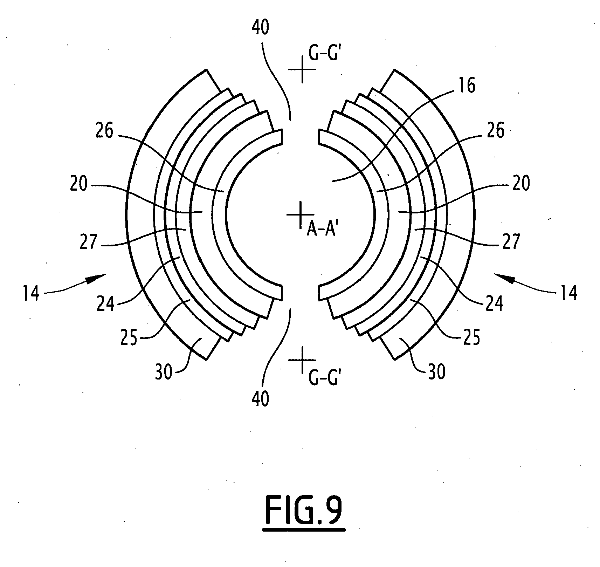

A first decommissioning facility 10 is schematically depicted in figure 2. The decommissioning facility 10 is here located onshore. It is configured to receive successive flexible line sections 12 to deconstruct the flexible line sections 12 into deconstructed sections 14 (shown in figures 8 or 9) and allow the recycling of the metal and polymer materials obtained from the deconstructed sections 14.

The flexible line sections 12 are obtained from an offshore decommissioning installation (not shown), including a recovery vessel equipped with a flexible line recovery system.

The flexible line recovery system for example comprises a spooling and/or a recovery tower to lift and wind the flexible line. It may comprises a flexible line cutter configured to cut the flexible line into flexible line sections 12 having a length advantageously comprised between 10 m and 20 m.

Alternatively, It may comprises reel(s) or carrousel(s) configured to receive the flexible line into a single flexible line section to be further cut onshore or offshore in several flexible line sections 12 at a separate time than the recovery.

The flexible line sections 12 are transported from their offshore recovery site to the onshore decommissioning facility 10 where they are processed to form the deconstructed sections 14 to be recycled.

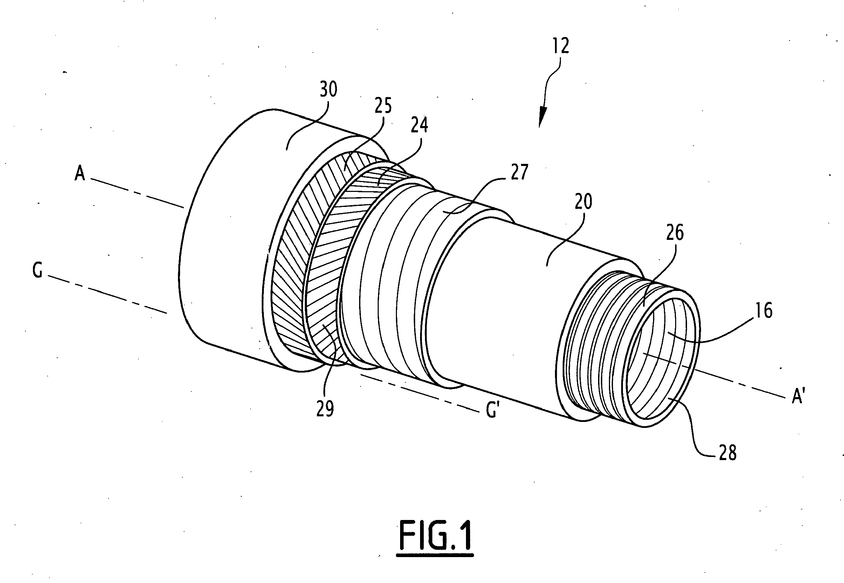

In the example shown on figure 1, the flexible line section 12 is a section of flexible pipe, in particular built according with the standards API 17J (Specification for Unbonded Flexible Pipe, 4th edition - May 2014) and API RP 17B (Recommended Practice for Flexible Pipe, 5th edition - March 2014) established by the American Petroleum Institute. The flexible pipe 10 is here an unbonded pipe. At least two adjacent layers of the flexible pipe 10 are free to move longitudinally with respect to each other during flexure of the pipe 10.

Alternatively, the flexible line section 12 is a section of a Hybrid Flexible Pipe (HFP), in particular built according with the standards DNVGL-ST-F119 (Thermoplastic Composite Pipes, Edition September 2019) established by the DNV (Det Norske Veritas GL). The hybrid flexible pipe is here an unbonded pipe. At least two adjacent layers of the hybrid flexible pipe are free to move longitudinally with respect to each other during flexure of the pipe.

Alternatively, the flexible line sections 12 are produced from another type of flexible pipe, such as a bonded pipe. There is an interest to recover the internal metallic layer of such bonded pipes, where applicable.

As well, the flexible line section 12 is a section of an subsea umbilical, in particular designed and built according with the standard API 17E / ISO 13628-5 "Specification for Subsea Umbilicals" published by the American Petroleum Institute (API), 5th Edition, July 2017. A subsea umbilical consists of a group of one or more types of elongated active umbilical elements, such as electrical cables, optical fiber cables, steel pipes and/or hoses, cabled together for flexibility, over-sheathed and, when applicable, armoured for mechanical strength. Umbilicals are typically used for transmitting power, signals and fluids (for example for fluid injection, hydraulic power, gas release, etc.) to and from a subsea facility.

In the example of figure 1, depicting an unbonded flexible pipe, each flexible line section 12 has an axis A-A' and delimits a central passage 16 for circulation of a fluid, advantageously a petroleum fluid.

The central passage 16 diameter advantageously ranges from 15 cm to 60 cm.

The flexible line section 12 delimits a plurality of concentric layers around the axis A-A'. The flexible line section 12 includes at least one first tubular sheath 20 formed of a polymeric material. The first tubular sheath 20 is a pressure sheath.

The flexible line section 12 further includes at least one layer of tensile armors 24, 25 positioned externally with respect to the first sheath 20.

The flexible line 10 further optionally includes an internal carcass 26 positioned inside the pressure sheath 20, and/or a pressure vault 27 inserted between the pressure sheath 20 and the layer(s) of tensile armors 24, 25, and/or an external sheath 30, intended for protecting the flexible line 10.

In a known way, the pressure sheath 20 is intended to tightly confine the fluid transported in the passage 16. It is formed of a polymeric material, for example based on a polyolefin such as polyethylene, based on a polyamide such as PA11 or PA12, or based on a fluorinated polymer such as polyvinylidene fluoride (PVDF).

The thickness of the pressure sheath 20 is for example comprised between 5 mm and 20 mm.

When present, the carcass 26 is formed for example with a first helicoidally wound profiled metal strip 28. The successive turns of the strip 28 are stapled with each other.

The strip 28 has a thickness advantageously comprised between 0.8 mm and 3.5 mm and a width advantageously comprised between 40 mm and 140 mm.

The main function of the carcass 26 is to absorb the squeezing radial forces.

The carcass 26 is positioned inside the pressure sheath 20. It is able to come in contact with the fluid circulating in the pressure sheath 20.

The helicoidal winding of the first profiled strip 28 forming the carcass 26 is with a short pitch, i.e. it has a helix angle with an absolute value close to 90°, typically comprised between 75° and 90°.

When present, the pressure vault 27 is intended to absorb the forces related to the pressure prevailing inside the pressure sheath 20. For example it is formed with a helicoidally wound metal profiled wire around the sheath 20. The profiled wire generally has a complex geometry, in particular Z-shaped, T-shaped, U-shaped, K-shaped, X-shaped or I-shaped.

The pressure vault 27 is helicoidally wound with a short pitch around the pressure sheath 20, i.e. with a helix angle of an absolute value close to 90°, typically comprised between 75° and 90°.

The flexible line 10 according to the invention comprises at least one layer of armors 24, 25 formed with a helicoidal winding of at least one elongated armor element 29.

In the example illustrated in Figure 1, the flexible line 10 includes a plurality of layers of armors 24, 25, in particular an inner layer of armors 24, applied on the pressure vault 27 and an outer layer of armors 25, around which is positioned underneath the outer sheath 30.

Each layer of armors 24, 25 includes longitudinal armor elements 29 wound with a long pitch around the axis A-A' of the flexible line.

By "wound with a long pitch", is meant that the absolute value of the helix angle is less than 60°, and is typically comprised between 25° and 55°.

The armor elements 29 of a first layer 24 are generally wound according to an opposite angle with respect to the armor elements 29 of a second layer 25. Thus, if the winding angle of the armor elements 29 of the first layer 24 is equal to + α, α being comprised between 25° and 55°, the winding angle of the armor elements 29 of the second layer of armors 25 positioned in contact with the first layer of armors 24 is for example equal to - α°.

The armor elements 29 are for example formed with metal wires, in particular steel wires, or with strips in composite material, for example strips reinforced with carbon fibers.

The external sheath 30 is intended to prevent permeation of fluid from the outside of the flexible line 10 towards the inside. It is advantageously made in a polymeric material, in particular based on a polyolefin, such as polyethylene, or on in a polyamide, such as PA11 or PA12.

The thickness of the external sheath 30 is for example comprised between 5 mm and 15 mm.

A first example of a deconstructed section 14, obtained after, processing in the onshore decommissioning facility 10 is shown in figure 8.

The deconstructed section 14 results from axially cutting the flexible line section 12 along a single generatrix G-G' parallel to the axis A-A' of the flexible line section 12.

Each layer 20, 24, 25, 26, 27 and 30 of the flexible line section 12 is cut along the generatrix G-G'. The deconstructed section 14 thus defines an axial longitudinal half split 40, which extends to the ends of the deconstructed section 14.

The different layers 20, 24, 25, 26, 27 and 30 of the deconstructed section 14 are thus axially cut along the generatrix G-G'. They are released and can be freed one from another to separate the metal layers, in particular layers 24, 25, 27, and 26, and the polymeric layers, in particular 20, 30.

A second example of a deconstructed section 14, obtained after processing in the onshore decommissioning facility 10 is shown in figure 9.

The deconstructed section 14 results from axially cutting the flexible line section 12 along two opposite generatrixes G-G' parallel to the axis A-A' of the flexible line section 12. The deconstructed section comprises two halves.

Each layer 20, 24, 25, 26, 27 and 30 of the flexible line section 12 is cut along two opposite generatrixes G-G' of the flexible line. The deconstructed section 14 thus defines two axial longitudinal total splits 40, which extends to the ends of the deconstructed section 14 to form the two halves.

The different layers 20, 24, 25, 26, 27 and 30 of the deconstructed section 14 are thus axially cut along the two generatrixes G-G'. They are released and can be freed one from another to separate the metal layers, in particular layers 24, 25, 27, and 26, and the polymeric layers, in particular 20, 30.

As shown in figure 2, the decommissioning facility 10 comprises a flexible line section storage 50 to store a plurality of flexible line sections 12 received from the offshore decommissioning installation, optionally, a flexible line cleaning unit 52, to clean the inside or outside of each flexible line section 12, in particular the fluid circulation passage 16, from accumulated solids.

The onshore decommissioning facility 10 further comprises a flexible line deconstruction unit 54, having a splitting stage 56 to produce the deconstructed sections 14, and a separation stage 58, to separate the layers 20, 24, 25, 26, 27 and 30 of the deconstructed sections 14 in metal layers and polymeric layers to be separately recycled in a recycling unit (not shown).

The decommissioning facility 10 also comprises a control room 60 to control in particular the operation of the splitting stage 56.

The splitting stage 56 is configured to receive in succession flexible line sections 12. Optionally, the flexible line sections 12 received by the splitting stage 56 are preferably cleaned at the cleaning unit 52.

As shown in figure 2, the splitting stage 56 comprises a container 70 and a flexible line section feeder 72, partially inserted in the container 70. It comprises an axial cutting tool 74, received in the container 70 in the vicinity of an end of the flexible line section feeder 72, to generate at least an axial longitudinal split 40 of the flexible line section 12 along at least one generatrix G-G'.

The splitting stage 56 may comprises a flexible line section loader 76 to load flexible line sections 12 coming from the cleaning unit 52 when present, into the flexible line section feeder 72 to feed the axial cutting tool 74.

In the example of figure 2, the container 70 comprises a floor 78, a ceiling 80, and vertical pillars 82 connecting the floor 78 to the ceiling 80.

The container 70 thus defines an inner volume 84, which opens axially at both longitudinal ends of the container 70.

The flexible line section feeder 72 is partially inserted longitudinally in the container inner volume 84. It comprises an elongated table 90 defining an axial feeding and guiding system 92 having a feeding axis B-B', which is here formed of an axial gutter. Preferably, it further comprises a flexible line section driver including successive horizontal rotary rollers 94, and a flexible line section power unit 96, able to drive the horizontal rotary rollers 94 in rotation to translate each flexible line section 12 received in the axial feeding and guiding system 92 along the feeding axis B-B' to the axial cutting tool 74 and beyond.

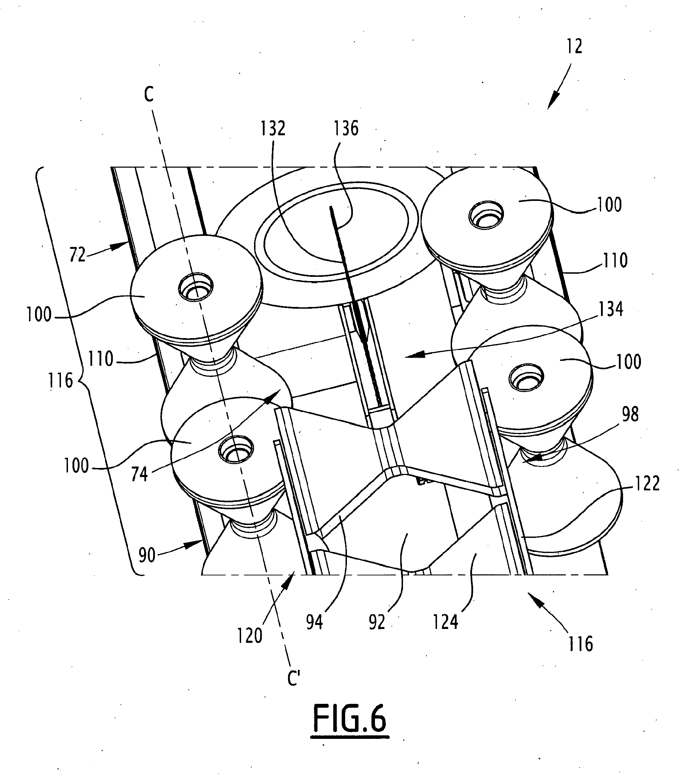

The flexible line section feeder 72 further comprises a flexible line maintaining system 98, to maintain the flexible line section 12 horizontally in the feeding and guiding system 92, and preferably vertical guide rollers 100 (see figure 6), positioned around the axial cutting tool 74 to maintain the axial position of the flexible line section 12 in an horizontal plane when it passes through the axial cutting tool 74.

The elongated table 90 here comprises two side beams 110, laterally defining the feeding and guiding system 92, and legs 112 connecting the side beams 110 to the ground.

The length of the elongated table 90 is greater than 1.5 times the length of a flexible line section 12 intended to be cut into the splitting stage 56.

The length of the elongated table 90 and thus, of the axial feeding and guiding system 92 is hence generally comprised between 5 m and 24 m.

The width separating the two side beams 110 is greater than 0.5 times the diameter of the flexible line section 12 and is generally comprised between 10 cm and 60 cm.

The horizontal rotary rollers 94 extend between the side beams 110 of the table 90. Each horizontal roller 94 is mounted rotary about a rotation axis perpendicular to the feeding axis B-B'.

In the example of figure 2, the horizontal rotary rollers 94 have a diabolo shape. They are rotatably supported at their ends by a respective beam 110. The rotary rollers 94 can advantageously have teeth which assist in the motion of the flexible line section 12 by increasing the friction with the flexible line section outer surface.

The elongated table 90 defines an upstream loading region 114, which protrudes out of the container 70, to allow the loading of successive flexible line sections 12 in the feeding and guiding system 92 via the flexible line section loader 76. It further comprises a downstream processing region 116 received in the container 70 in which the axial cutting tool 74 is mounted.

The power unit 96 is configured to drive at least part of the horizontal rotary rollers 94 and preferably each horizontal rotary roller 94 in rotation around their rotation axis to translate a section of flexible line 12 along the axial feeding and guiding system 92 to the axial cutting tool 74.

The flexible line maintaining system 98 comprises at least one mobile maintaining member 118, and at least one mover here formed of an actuator 119 configured to move the mobile maintaining member 118 towards the feeding and guiding system 92 to lay on the flexible line section 12.

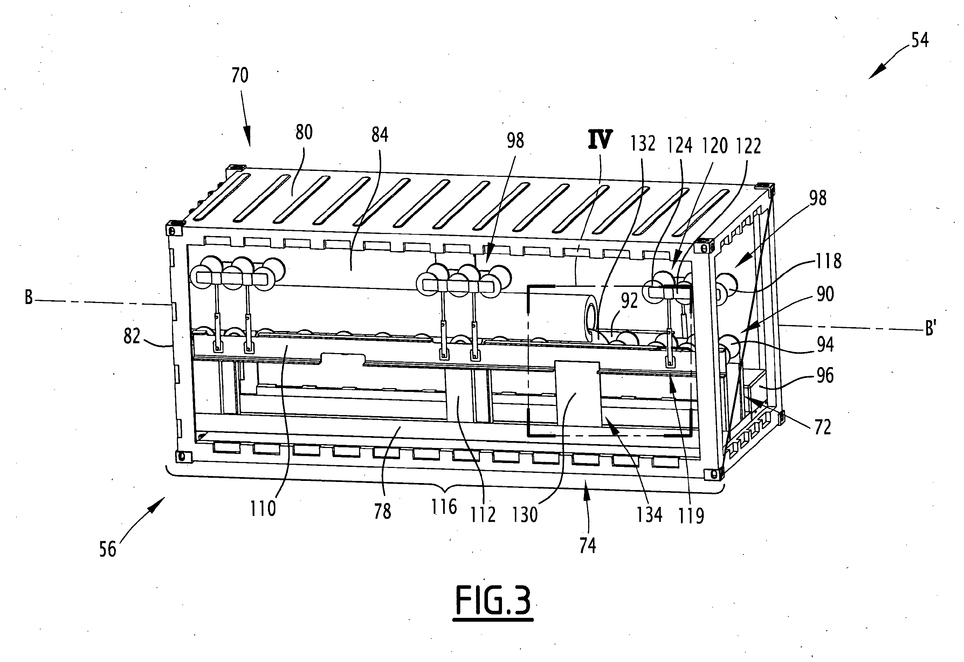

In the example of figures 2 to 4, the flexible line maintaining system 98 comprises several sets of maintaining members 118, each being actuated by several actuators 119.

The maintaining member 118 comprises a frame 120, having two axial structural members 122, and at least one transverse maintaining roller 124 rotatably mounted between the axial structural members 122.

The transverse maintaining roller 124 also has a diabolo shape. In this example, it is mounted idle on the structural members 122.

The actuator 119 for example comprises a deployable jack. It connects for example the maintaining member 118 to a fixed support. In the example shown in the figures 2 to 4, the fixed support is a side beam 110 of the elongated table 90. The actuator 119 protrudes upwardly from the side beam 110.

In a variant, not shown, the fixed support is the ceiling 80 of the container 70. The actuator 119 protrudes downwardly from the ceiling 80 of the container 70.

The actuator 119 is configured to move the maintaining member 118 between a released position, relatively away from the feeding and guiding system 92, and a flexible line section engagement position, closer to the feeding and guiding system 92, to maintain the flexible line section 12 in the feeding and guiding system 92.

As depicted in figure 6, the vertical guide rollers 100 are mounted vertically at the top of the side beams 110 of the elongated table 90. Each vertical guide roller 100 is mounted rotary around a vertical rotation axis C-C'. In the example of figure 6, the vertical guide rollers 100 are positioned on each side of the axial cutting tool 74, each vertical guide roller 100 facing the axial cutting tool 74.

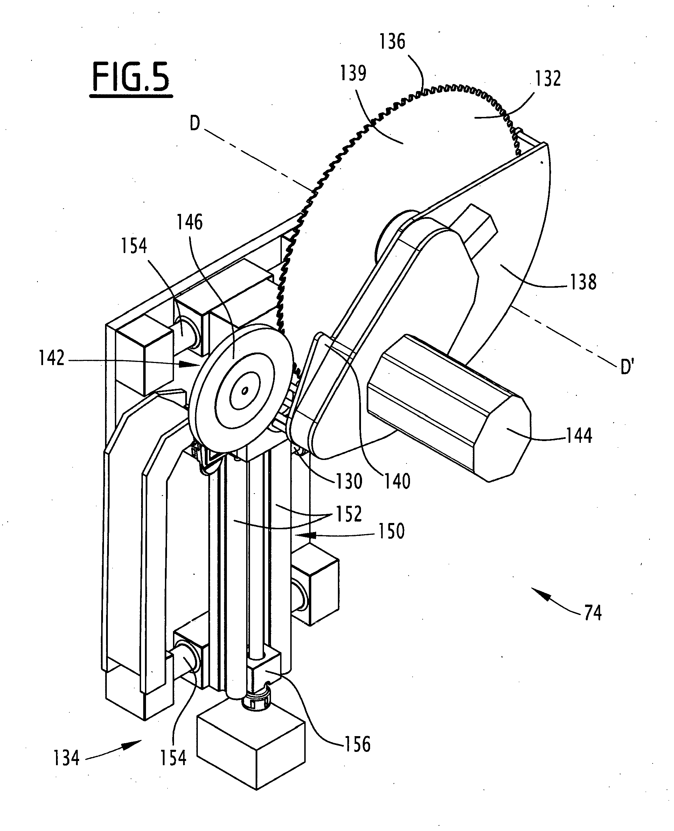

The axial cutting tool 74 is mounted in the feeding and guiding system 92, inside the inner volume 84 of the container 70. As shown in figure 5, it comprises a mobile carriage 130, carrying, in this example, a rotary wheel saw 132, and a saw positioning mechanism 134 connected to the mobile carriage 130 to vertically and axially position the saw 132.

In variant (not shown), the saw can be located below or above the product to be cut. The saw can be a blade or wire saw, having saw blade or wire axis D-D' transverse to the feeding axis B-B'.

in variant (not shown), the saw can mobile along the product to be cut.

The rotary saw 132 shown in figure 5 extends in a vertical plane parallel to or containing the feeding axis B-B'. It is mounted rotary around a saw rotation axis D-D' perpendicular to the feeding axis B-B'.

In the example of figure.5, the saw 132 comprises teeth 136 at its periphery.

The mobile carriage 130 also carries a protection shield 138, a cooling device 140, a cleaning member 142 to clean the teeth 136 of the saw 132 at a given angular position around the saw rotation axis D-D', and a saw driving unit 144.

The protection shield 138 extends parallel to the surface of the saw 132. It partially covers the surface of the saw 132. An upper region 139 of the saw 132 protrudes out of the protection shield 138.

In the example of figure 5, the protection shield 138 also carries the cooling device 140 and the saw driving unit 144.

The cooling device 140 for example comprises a cooling medium like water or/and a chemical spray to ensure that the cooling medium is in contact with the surface of the saw 132.

The cleaning member 142 for example comprises a brush 146 which is mounted at a fixed angular position with regards to the saw rotation axis D-D', along the periphery of the saw 132.

The teeth 136 of the saw 132 engage in the brush 146 to remove material jammed on the teeth 136. In the example of figure 5, the brush 146 has a disc shape.

The saw positioning mechanism 134 comprises an intermediate carriage 150 carrying at least a vertical guide 152 and a horizontal guide 154 of the intermediate carriage 152.

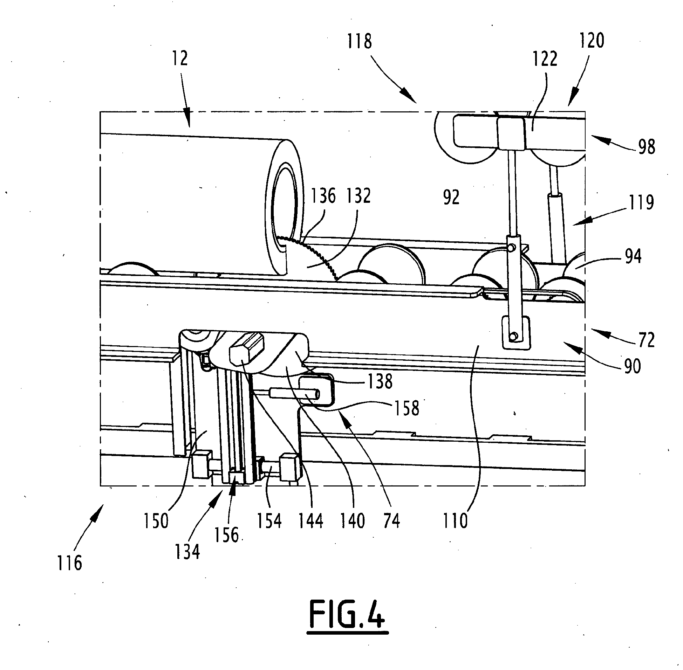

The saw positioning mechanism 134 further comprises a vertical actuator 156 to vertically move the saw mobile carriage 130 and a horizontal actuator 158 (visible in figure 4) to horizontally move the saw mobile carriage 130 and the intermediate carriage 150, parallel to the feeding axis B-B'.

The vertical guide 152 comprises at least one vertical bar onto which the mobile carriage 130 is mounted mobile in translation. In the example of figure 5, the vertical guide 152 comprises two parallel bars.

The horizontal guide 154 comprises at least one horizontal bar, onto which the intermediate carriage 150 is mounted mobile in translation. In the example of figure 5, it comprises two parallel horizontal bars.

In this example, the vertical actuator 156 comprises a worm gear actuator including a rotary screw engaged on the saw mobile carriage 130.

As shown in figure 4, the horizontal actuator 158 comprises a jack mounted on a side beam 110 of the elongated table 90 to actuate the intermediate carriage 150 and move it along the horizontal guide 154.

Accordingly, the saw positioning mechanism 134 is configured to place the protruding. region 139 of the saw 132 at an appropriate height to cut the thickness of the flexible line section 12 along the generatrix G-G'. In operation, the protruding region 139 of the saw 132 protrudes above the horizontal rollers 94 and preferentially above the upper face of the side beams 110 of the elongated table 90.

The horizontal actuator 158 is configured to oppose the force resulting from the axial translation of the flexible line section 12 which applies on the saw 132. It is configured to maintain the saw 132 in position against this translation, to allow the cutting of the split 40 along the generatrix G-G' of the flexible line section 12.

In the example of figure 6, the saw 132 central vertical plane is located in the middle of the axial feeding and guiding system 92, between two adjacent horizontal rotary rollers 94.

The sides of the saw 132 face each pair of vertical guide rollers 100.

As shown in figure 2, the flexible line section loader 76 comprises a base rack 170, laying on the ground, lateral arms 172, connecting the base rack 170 to a side beam 110 of the elongated table 90, and at least a chain conveyor 174 running along the lateral arms 172.

The flexible line sections loader 76 further comprises lower stops 176, to retain a flexible line section 12 when loaded into the base rack 170 and upper stops 178, to stop the transverse movement of a flexible line section 12 when it laterally enters the feeding and guiding system 92 driven by each chain conveyor 174.

The base rack 170 comprises an axial plate 180 extending along the length of the upstream region 114 of the elongated table 90, located parallel to the upstream region 114 and below the feeding and guiding system 92.

The lateral arms 172 are inclined from the lower axial plate 180 to an upper surface of a side beam 110. They extend parallel to each other, perpendicularly to the feeding axis B-B'.

Each chain conveyor 174 extends along and/or parallel to the lateral arms 172. It for example comprises two pulleys, and a loop of chain wound around the two pulleys. At least one of the two pulleys is driven in rotation by the power unit 96.

In the example of figure 2, the lower stops 176 comprise teeth protruding from a side of the plate 180 opposed to the feeding and guiding system 92. The upper stops 178 comprise teeth protruding from the side beam 110 opposed to the side beam 110 onto which the lateral arms 172 connect.

The separation stage 58 includes tools (not shown) configured to separate the layers 20, 24, 25, 26, 27 and 30 of the deconstructed section 14, after at least a split 40 has been generated along a generatrix G-G'. It for example comprises a grasper able to selectively grasp each layer 20, 24, 25, 26, 27 and 30 to separate them among metallic and polymer layers.

The control unit 60 is able to control the operation of the axial cutting tool 74, of the flexible line section feeder 72 and of the flexible line section loader 76.

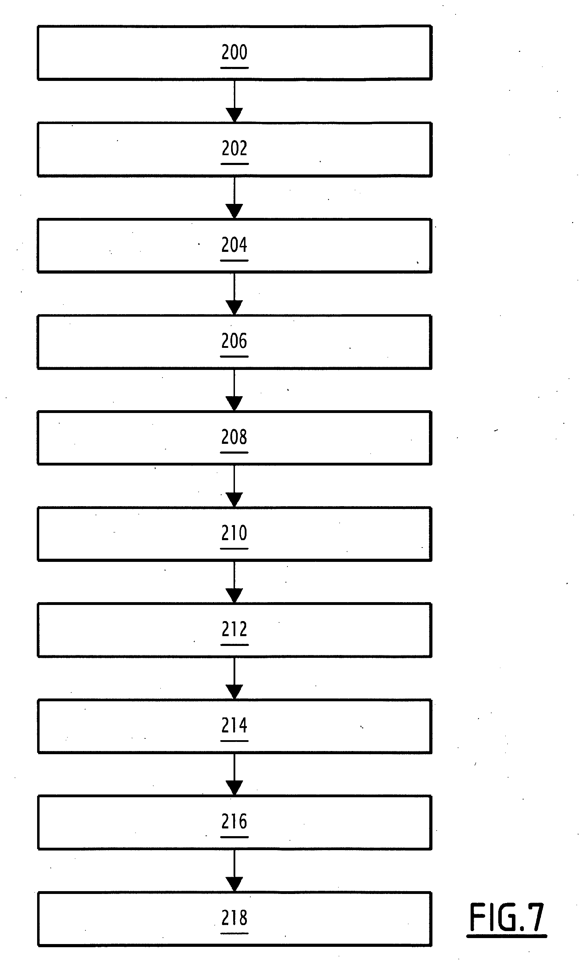

A decommissioning process according to the invention will now be described in reference to figure 7.

At step 200, a flexible line, in particular a flexible pipe, is retrieved from an offshore production site by recovering it on a recovery vessel.

At step 202, the flexible line is preferably cut into flexible line sections 12 directly on the vessel, with a length comprised between 10 m and 20 m.

In a variant, the flexible line is wound around a drum, or into a basket and the cutting of the flexible line in flexible line sections 12 is carried out onshore during or after the unloading of the flexible line.

If needed, at step 204, the flexible line sections 12 are transported to the onshore decommissioning facility 10. The flexible line sections 12 are stored into the flexible line section storage 50.

If needed, at step 206, the flexible line sections 12 are then transferred in succession to the cleaning unit 52 to be cleaned. Any accumulation of material for example Naturally Occurring Radioactive Materials (also known as NORM) or residue present in the flexible line section 12, in particular in the central passage 16, is removed from the flexible line sections 12.

At step 208, each flexible line section 12 is brought in succession to the flexible line section loader 76 visible in figure 2.

The flexible line section 12 is placed in the base rack 170, with its axis A-A' parallel to the feeding axis B-B'.

Each chain conveyor 174 moves the flexible line section 12 along the lateral arms 172 up to the axial feeding and guiding system 92 in which the flexible line section 12 enters. The upper stops 178 guide the flexible line section 12 into the axial feeding and guiding system 92.

In the axial feeding and guiding system 92, the flexible line section 12 rests on the horizontal rotary rollers 94. The rotary rollers 94 are driven in rotation by power unit 96. They translate the flexible line section 12 to the downstream region 116 of the axial feeding and guiding system 92 along the feeding axis B-B'.

At step 210, when entering the downstream region 116, the maintaining member 118 of the flexible line maintaining system 98 is placed above and preferentially in contact with an upper region of the flexible line section 12.

Advantageously, the actuator 119 moves the maintaining member 118 downwards towards the axial feeding and guiding system 92. The flexible line section 12 is maintained against the horizontal rotary rollers 94, such that the flexible line section axis A-A' remains aligned along the feeding axis B-B'.

At step 212, the height of the saw 132 is preferably controlled by the saw positioning mechanism 134, as a function of the flexible line section 12 diameter and as a function of the thickness of the layers 20, 24, 25, 26, 27 and 30 present in the flexible line section 12.

As shown in figure 5, the height of the saw 132 is controlled to allow a cutting over the whole thickness of the layers 20, 24, 25, 26, 27 and 30 of the flexible line section 12, along at least a generatrix G-G', advantageously below the central axis A-A' of the flexible line section 12.

At step 214, the flexible line section 12 is translated over the saw 132 from one longitudinal end of the flexible line section 12 to the other longitudinal end of the flexible line section 12. The saw 132 thus generates a longitudinal split 40 along the generatrix(es) G-G' of the flexible line section 12 across the whole thickness of the layers 20, 24, 25, 26, 27 and 30.

While the flexible line section 12 progresses along the axial feeding and guiding system 92 and passes over the axial cutting tool 74, the horizontal actuator 158 maintains the axial position of the saw 132, opposing the axial force generated by the translation of the flexible line section 12.

Moreover, the flexible line section 12 is horizontally maintained by the vertical guide rollers 100, while the saw 132 cuts the flexible line section 12.

A deconstructed section 14 is thus formed having a single longitudinal split 40 over the whole length of the flexible line section 12, as shown in figure 8 or being split in two separate parts along two generatrixes G-G', as shown in Figure 9.

Alternatively, the flexible line section 12 may be partially cut, not in its entirety, the split being stopped prior to cut the inner layers of the flexible flexible line section such as for example prior to cut into the interlocked carcass.

At step 216, the deconstructed section 14 is recovered at the outlet of the axial feeding and guiding system 92, at the end of the downstream region 116 opposed to the upstream region 114.

At step 218, the deconstructed flexible line section 14 is then transferred to the separation stage 58, to separate the metal material resulting from the metal layers 24, 25, 26, 27 and the polymer material resulting from the polymer layers 20, 30.

At least part of the metals and/or at least part of the polymers recovered from the deconstructed flexible line section 14 can then be recycled.

The flexible line deconstruction unit 54 of the decommissioning facility 10 is thus particularly efficient to process a large number of flexible line sections 12 recovered from an offshore production site, allowing a significant recycling of the materials recovered from the deconstructed sections 14.

When onshore, the flexible line deconstruction unit 54 does not occupy space on a recovery vessel, allowing traditional laying/recovery vessels to be used without significant modifications for carrying out the decommissioning offshore operations.

Separating the recovered flexible line in flexible line sections 12 on the recovery vessel allows the flexible line sections 12 to be unloaded with simple harbor handling equipment, in particular cranes, of low capacity. The flexible line sections 12 can be transported easily to the onshore decommissioning facility 10.

The flexible line deconstruction unit 54 according to the invention can be easily set up in the onshore decommissioning facility 10, without specific equipment or utilities, due to its very basic structure. The flexible line deconstruction unit 54 is moreover easily maintained and very reliable, even if located in remote places.

The steps of loading each flexible line section 12 in the axial feeding and guiding system 92, of transporting it to the axial cutting tool 74, and of cutting an axial split 40 are automated in the flexible line deconstruction unit 54. Thus, the staff required for processing the flexible line sections is minimized and the operations are very safe, since the staff is protected from the cutting tool 74.

In addition, merely cutting one or two axial longitudinal split(s) 40 in each flexible line section 12 uses much less energy than forming chips with a crusher. The different layers 20, 24, 25, 26, 27 and 30 of the deconstructed flexible line sections 14 remain nonetheless easily separable, and can thus selectively recycled.

The processing of a large number of flexible line sections 12, for example in the order of hundreds or thousands flexible line sections 12 is thus possible, at low cost and with minimal staff involvement, even in remote areas.

The flexible line deconstruction unit 54 according to the invention can also be used with a variety of different flexible lines, in particular with flexible flexible lines of different diameters and/or of different structures with minimal adaptation of the processing parameters.

In a variant, the flexible line is processed as a single flexible line section having the length of the initial flexible line in the splitting stage 56 and is cut transversely into several sections 14 of deconstructed flexible line at the outlet of the splitting stage 56, for example at the downstream end of the axial feeding and guiding system 92.

In a variant, the axial cutting tool 74 comprises another type of saw or a high pressure water jet to cut the axial split 40.

In a variant, not shown, the saw positioning mechanism 134 comprises a guide structure preferably attached to the table 90, onto which the mobile carriage 130 is configured to vertically translate. It comprises at least a jack, preferably attached to the ceiling 80 to activate the translation of the mobile carriage 130 on the guide structure, between a rest position, away from the feeding axis B-B' (for example above the feeding axis B-B') and an active cutting position closer to the feeding axis B-B'.

It has been described that the flexible line deconstruction unit 54 is used onshore. However, it would not come out of the scope of protection of the present invention to use the flexible line deconstruction unit 54 of the invention offshore, installed on the deck of a vessel or on a platform or installed on the deck of a vessel or a barge anchored at a quayside.

The decommissioning facility 10 and the corresponding decommissioning method have been described above in relation to the decommissioning of a flexible pipe, in particular an unbonded flexible pipe. It would operate similarly with different types of flexible lines such as described above.

## Claims

1. A flexible line deconstruction unit (54), comprising:
- a flexible line section feeder (72) comprising an axial feeding and guiding system (92) having a flexible, line section feeding axis (B-B'), the axial feeding and guiding system (92) being configured to receive a flexible line section (12) with the flexible line section longitudinal axis (A-A') aligned with the feeding axis (B-B'), the flexible line section feeder (72) comprising a flexible line section driver (94, 96), configured to move the flexible line section (12) along the feeding axis (B-B'); and
- an axial cutting tool (74), positioned in the axial feeding and guiding system (92) to cut an axial split (40) in the flexible line section (12) along the feeding axis (B-B').

2. The onshore deconstruction unit (54) of claim 1, wherein the axial cutting tool (74) comprises a saw (132), in particular a rotary saw having a saw rotation axis (D-D') transverse to the feeding axis (B-B'), or a blade or wire saw, having saw blade or wire axis (D-D') transverse to the feeding axis (B-B').

3. The onshore deconstruction unit (54) according to claim 2, wherein the cutting tool (74) comprises a cleaning member (142), in particular a brush (146), positioned in contact with a periphery of the saw (132), at a fixed angular position with regard to the saw (132).

4. The flexible line deconstruction unit (54) according to any one of claims 2 or 3, wherein the axial cutting tool (74) comprises a saw positioning mechanism (134), configured to vertically and/or horizontally move the saw (132) in the feeding and guiding system (92).

5. The flexible line deconstruction unit (54) according to any one of the preceding claims, comprising a flexible line section loader (76), configured to manually or automatically load a flexible line section (12) into the axial feeding and guiding system (92).

6. The flexible line deconstruction unit (54) according to claim 5, wherein the flexible line section loader (76) comprises at least a transverse conveyor (174) configured to transversely move the flexible line section longitudinal axis (A-A') towards the feeding axis (B-B').

7. The flexible line deconstruction unit (54) according to any one of the preceding claims, comprising a container (70), the container (70) having a floor (78), a ceiling (80), and pillars (82) connecting the floor (78) to the ceiling (80), the container (70) delimiting an inner volume (84) receiving at least a downstream region (116) of the feeding and guiding system (92), and the axial cutting tool (74), the feeding and guiding system (92) comprising an upstream region (118) protruding out of the inner volume (84).

8. The flexible line deconstruction unit (54) according to any one of the preceding claims, wherein the flexible line section driver comprises lower horizontal rotary rollers (94) positioned in the feeding and guiding system (92).

9. The flexible line deconstruction unit (54), according to any one of the preceding claims, wherein the flexible line section feeder (72) comprises vertical guide rollers (100), protruding vertically around the axial cutting tool (74), to laterally guide the flexible line section (12) in contact with the axial cutting tool (74).

10. The flexible line deconstruction unit (54) according to any one of the preceding claims, wherein the flexible line section feeder (72) comprises a flexible line maintaining system (98), comprising at least a flexible line maintaining member (118), mobile towards the feeding and guiding system (92) to maintain the flexible line section (12) in the feeding and guiding system (92),
the flexible line maintaining member (118) optionally comprising maintaining rollers (124) configured to maintain the flexible line in the feeding and guiding system (92), the flexible line maintaining system (98) being configured to move the maintaining rollers (124) towards the feeding and guiding system (92).

11. A flexible line decommissioning facility (10), comprising:
- a flexible line section storage or handling element (50), including a plurality of flexible line sections (12); and
- a flexible line deconstruction unit (54) according to any one of the preceding claims, to be fed with at least one flexible line section (12) from the plurality of flexible line sections (12).

12. The decommissioning facility (10) according to claim 11, further comprising a flexible line section cleaning unit (52), the flexible line deconstruction unit (54) comprising a separation stage (58), to separate layers of deconstructed flexible line sections (14) having at least one longitudinal split (40) obtained after cutting the flexible line sections (12) in the flexible line deconstruction unit (54).

13. The decommissioning facility (10) according to any one of claims 11 or 12, wherein the plurality of flexible line sections (12) comprises flexible pipe sections or/and umbilical sections, each flexible pipe section (12) and/or umbilical section including at least a polymer or composite sheath (20) and at least an armor layer (24, 25) wound around the polymer or composite sheath (20), the axial cutting tool (74) being configured to cut the axial split (40) along a generatrix (G-G') of the flexible line section through the polymer or composite sheath (20) and the or each armor layer (24, 25).

14. A flexible line decommissioning method, comprising the following steps:
- feeding at least one flexible line section (12) in a flexible line section feeder (72) of a flexible line deconstruction unit (54), the flexible line section feeder (72) comprising an axial feeding and guiding system (92) having a feeding axis (B-B'), the axial feeding and guiding system (92) receiving the flexible line section (12), the flexible line section longitudinal axis (A-A') aligning with the feeding axis (B-B');
- powering a flexible line section driver (94, 96) of the flexible line section feeder (72), to move the flexible line section (12) along the feeding axis (B-B');
- cutting an axial split (40) in the flexible line section (12) along the feeding axis (B-B') with an axial cutting tool (74) of the flexible line deconstruction unit (54), the axial cutting tool (74) being positioned in the feeding and guiding system (92);
- retrieving a deconstructed flexible line section (14) having a longitudinal split (40) along at least one generatrix.

15. The method according to claim 14, comprising a preliminary step of recovering a flexible line offshore, and a step of splitting the recovered flexible line into flexible line sections (12), preferentially carried out offshore, the method comprising transporting the flexible line sections (12) to the flexible line deconstruction unit (54).
